# EUROPÄISCHE PATENTANMELDUNG

(11) **EP 4 446 104 A1**
(43) Veröffentlichungstag der Anmeldung: **16.10.2024**
(21) Anmeldenummer: 24160965.0
(22) Anmeldetag: 01.03.2024
(51) Int. Cl.: B30B 11/08, B30B 15/26, G05B 19/042, B30B 11/00, G06N 3/08

(54) **VERFAHREN UND VORRICHTUNG ZUM KONFIGURIEREN EINES HERSTELLPROZESSES EINER RUNDLÄUFERPRESSE**

(30) Priorität: 11.04.2023 DE 102023109039
(71) Anmelder: Fette Compacting GmbH, 21493 Schwarzenbek (DE)
(72) Erfinder: Vulp, Sven, 21514 Klein Pampau (DE); Petry, Ina, 22529 Hamburg (DE); Klukkert, Marten, 20144 Hamburg (DE); Novikova, Anna, 22609 Hamburg (DE); Helmel, Johannes, 23879 Mölln (DE)
(74) Vertreter: Hauck Patentanwaltspartnerschaft mbB

(57) **Zusammenfassung**

Die Erfindung betrifft ein Verfahren zum Konfigurieren einer Rundläuferpresse, wobei die Rundläuferpresse einen mittels eines Drehantriebs drehend antreibbaren Rotor umfasst, wobei der Rotor obere und untere Stempelführungen aufweist, wobei in der oberen Stempelführung obere Pressstempel des Rotors und in der unteren Stempelführung untere Pressstempel des Rotors geführt sind, und wobei der Rotor eine zwischen den Stempelführungen angeordnete Matrizenscheibe mit Kavitäten aufweist, wobei die Rundläuferpresse weiter eine Fülleinrichtung umfasst, durch die Pulvermaterial in die Kavitäten der Matrizenscheibe gefüllt wird, und wobei die Rundläuferpresse weiter eine Druckeinrichtung umfasst, die im Betrieb mit den oberen und unteren Pressstempeln zum Verpressen des Pulvermaterials in den Kavitäten der Matrizenscheibe zu Tabletten zusammenwirkt, umfassend die Schritte:
• in einer Datenbank werden mehrere Gruppen von Parameterdaten hinterlegt, umfassend in einer ersten Gruppe Komponentenparameterdaten zu in der Rundläuferpresse montierten Komponenten, in einer zweiten Gruppe Prozessparameterdaten zu Prozessparametern beim Betrieb der Rundläuferpresse, in einer dritten Gruppe Pulverparameterdaten zu Pulvereigenschaften des in der Rundläuferpresse zu verpressenden Pulvermaterials, und in einer vierten Gruppe Tablettenparameterdaten zu Tabletteneigenschaften der in der Rundläuferpresse herzustellenden Tabletten,
• in der Datenbank hinterlegte Parameterdaten der verschiedenen Gruppen werden miteinander korreliert, derart dass zu vorgegebenen Parameterdaten aus mindestens zwei der vier Gruppen Parameterdaten der weiteren der vier Gruppen bestimmbar sind,
• zum Konfigurieren der Rundläuferpresse werden zu vorgegebenen Parameterdaten aus mindestens zwei der vier Gruppen gemäß der Korrelation der in der Datenbank hinterlegten Parameterdaten Parameterdaten der weiteren der vier Gruppen festgelegt.

Die Erfindung betrifft außerdem eine entsprechende Vorrichtung.

## Beschreibung

Die Erfindung betrifft ein Verfahren zum Konfigurieren eines Herstellprozesses einer Rundläuferpresse, wobei die Rundläuferpresse einen mittels eines Drehantriebs drehend antreibbaren Rotor umfasst, wobei der Rotor obere und untere Stempelführungen aufweist, wobei in der oberen Stempelführung obere Pressstempel des Rotors und in der unteren Stempelführung untere Pressstempel des Rotors geführt sind, und wobei der Rotor eine zwischen den Stempelführungen angeordnete Matrizenscheibe mit Kavitäten aufweist, wobei die Rundläuferpresse weiter eine Fülleinrichtung umfasst, durch die Pulvermaterial in die Kavitäten der Matrizenscheibe gefüllt wird, und wobei die Rundläuferpresse weiter eine Druckeinrichtung umfasst, die im Betrieb mit den oberen und unteren Pressstempeln zum Verpressen des Pulvermaterials in den Kavitäten der Matrizenscheibe zu Tabletten zusammenwirkt.

Die Erfindung betrifft außerdem eine Vorrichtung zum Konfigurieren eines Herstellprozesses einer Rundläuferpresse, wobei die Rundläuferpresse einen mittels eines Drehantriebs drehend antreibbaren Rotor umfasst, wobei der Rotor obere und untere Stempelführungen aufweist, wobei in der oberen Stempelführung obere Pressstempel des Rotors und in der unteren Stempelführung untere Pressstempel des Rotors geführt sind, und wobei der Rotor eine zwischen den Stempelführungen angeordnete Matrizenscheibe mit Kavitäten aufweist, wobei die Rundläuferpresse weiter eine Fülleinrichtung umfasst, durch die Pulvermaterial in die Kavitäten der Matrizenscheibe gefüllt wird, und wobei die Rundläuferpresse weiter eine Druckeinrichtung umfasst, die im Betrieb mit den oberen und unteren Pressstempeln zum Verpressen des Pulvermaterials in den Kavitäten der Matrizenscheibe zu Tabletten zusammenwirkt,
In Rundläuferpressen ist regelmäßig eine Vielzahl von oberen und unteren Pressstempeln vorgesehen, die paarweise jeweils einer Kavität einer Matrizenscheibe zugeordnet sind. Im Betrieb der Rundläuferpresse drehen die oberen und unteren Pressstempel gemeinsam mit der Matrizenscheibe, wobei ihre axiale Bewegung durch Steuerkurven gesteuert und durch obere und untere Stempelführungen geführt wird. Im Zuge der Drehung durchläuft die Matrizenscheibe verschiedene Einrichtungen der Rundläuferpresse, nämlich eine Fülleinrichtung, in der zu verpressendes Pulvermaterial in die Kavitäten der Matrizenscheibe gefüllt wird und eine Druckeinrichtung, in der die oberen und unteren Pressstempel in der Regel durch obere und untere Druckrollen zum Verpressen des Pulvermaterials zu Tabletten in die Kavitäten gedrückt werden. Nachfolgend zu der Druckeinrichtung werden die oberen Pressstempel nach oben aus den Kavitäten geführt und die in den Kavitäten erzeugten Tabletten werden durch die unteren Pressstempel auf die Oberseite der Matrizenscheibe geschoben. Beispielsweise durch einen Abstreifer werden die Tabletten anschließend von der Matrizenscheibe in einen Ausgang der Rundläuferpresse abgestreift, aus dem sie einer weiteren Verarbeitung zugeführt werden.

Die Qualität der hergestellten Tabletten, insbesondere die Tablettenhärte, die Tablettendichte etc., hängt sowohl von der Maschinenhardware, also den in der Rundläuferpresse montierten Komponenten, als auch von Prozessparametern während des Tablettierprozesses, wie zum Beispiel Drehgeschwindigkeit des Rotors oder eines Füllrads einer Fülleinrichtung, ab. Auch die Pulvercharakteristika des in der Rundläuferpresse zu verpressenden Pulvermaterials, zum Beispiel seine Dichte oder Partikelgrößenverteilung, beeinflussen die Eigenschaften der hergestellten Tabletten. Insgesamt wird die Tablettenqualität damit durch zahlreiche Faktoren beeinflusst, die sich auch gegenseitig beeinflussen. Die Veränderung eines einzelnen Einflussfaktors, zum Beispiel ein anderes Pulvermaterial oder ein anders aus einem aktiven pharmazeutischen Bestandteil (API) und einem oder mehreren Exzipienten zusammengesetztes Pulvermaterial, erfordert entsprechend zur Beibehaltung der gewünschten Tablettenqualität die Anpassung weiterer Parameter.

Bislang basiert die jeweilige Findung der optimalen Parameter für einen Tablettierprozess auf personengebundenem Know-how. Insbesondere wird anhand der Ergebnisse einer Reihe von Versuchen durch eine erfahrene Bedienperson die richtige Kombination unterschiedlicher Parameter der Rundläuferpresse für einen Tablettierprozess eingestellt.

Durch personengebundenes Know-how werden allerdings keine sicher reproduzierbaren und gleichbleibenden Ergebnisse erzielt. Vielmehr hängt der Prozesserfolg von der jeweiligen Bedienperson ab. Zudem ist der Optimierungsprozess insbesondere bei einer Veränderung einzelner Parameter zeit- und materialaufwendig. Da aus Zeitgründen üblicherweise nicht mithilfe statistischer Versuchsplanung alle möglichen Parameterkombinationen geprüft werden können, kann häufig nicht sichergestellt werden, dass im Rahmen der im verfügbaren Zeitrahmen durchgeführten Versuche das optimale Setup für den jeweiligen Prozess identifiziert und damit die optimale Tablettenqualität erzielt werden kann.

Ausgehend von dem erläuterten Stand der Technik liegt der Erfindung daher die Aufgabe zugrunde, ein Verfahren und eine Vorrichtung der eingangs genannten Art bereitzustellen, mit denen der Herstellprozess der Rundläuferpresse in zuverlässiger, einfacher und sicher reproduzierbarer Weise auch bei sich ändernden Parametern optimal für den jeweils gewünschten Tablettierprozess konfiguriert werden kann.

Die Erfindung löst die Aufgabe durch die unabhängigen Ansprüche 1 und 16. Vorteilhafte Ausgestaltungen finden sich in den abhängigen Ansprüchen, der Beschreibung und den Figuren.

Für ein Verfahren der eingangs genannten Art löst die Erfindung die Aufgabe durch die Schritte:
- in einer Datenbank werden mehrere Gruppen von Parameterdaten hinterlegt, umfassend in einer ersten Gruppe Komponentenparameterdaten zu in der Rundläuferpresse montierten Komponenten, in einer zweiten Gruppe Prozessparameterdaten zu Prozessparametern beim Betrieb der Rundläuferpresse, in einer dritten Gruppe Pulverparameterdaten zu Pulvereigenschaften des in der Rundläuferpresse zu verpressenden Pulvermaterials, und in einer vierten Gruppe Tablettenparameterdaten zu Tabletteneigenschaften der in der Rundläuferpresse herzustellenden Tabletten,
- die in der Datenbank hinterlegten Parameterdaten der verschiedenen Gruppen werden miteinander korreliert, derart dass zu vorgegebenen Parameterdaten aus mindestens zwei der vier Gruppen Parameterdaten der weiteren der vier Gruppen bestimmbar sind,
- zum Konfigurieren des Herstellprozesses der Rundläuferpresse werden zu vorgegebenen Parameterdaten aus mindestens zwei der vier Gruppen gemäß der Korrelation der in der Datenbank hinterlegten Parameterdaten Parameterdaten der weiteren der vier Gruppen festgelegt.

Für eine Vorrichtung der eingangs genannten Art löst die Erfindung die Aufgabe dadurch, dass eine Konfiguriereinrichtung vorgesehen ist, umfassend eine Datenbank, in der mehrere Gruppen von Parameterdaten hinterlegt sind, umfassend in einer ersten Gruppe Komponentenparameterdaten zu in der Rundläuferpresse montierten Komponenten, in einer zweiten Gruppe Prozessparameterdaten zu Prozessparametern beim Betrieb der Rundläuferpresse, in einer dritten Gruppe Pulverparameterdaten zu Pulvereigenschaften des in der Rundläuferpresse zu verpressenden Pulvermaterials, und in einer vierten Gruppe Tablettenparameterdaten zu Tabletteneigenschaften der in der Rundläuferpresse herzustellenden Tabletten, wobei die in der Datenbank hinterlegten Parameterdaten der verschiedenen Gruppen miteinander korreliert sind, derart dass zu vorgegebenen Parameterdaten aus mindestens zwei der vier Gruppen Parameterdaten der weiteren der vier Gruppen bestimmbar sind, und dass die Konfiguriereinrichtung ausgebildet ist, zum Konfigurieren des Herstellprozesses der Rundläuferpresse zu vorgegebenen Pulverparameterdaten und/oder vorgegebenen Tablettenparameterdaten gemäß der Korrelation der in der Datenbank hinterlegten Parameterdaten Komponentenparameterdaten und/oder Prozessparameterdaten festzulegen.

Der grundsätzliche Aufbau der Rundläuferpresse, wie sie beim erfindungsgemäßen Verfahren zum Einsatz kommt bzw. Gegenstand der vorliegenden Erfindung ist, wurde eingangs erläutert. Zum Ermöglichen einer reproduzierbaren Konfiguration der Rundläuferpresse für einen optimalen Tablettierprozess wird erfindungsgemäß vorgeschlagen, für den Tablettierprozess relevante Parameterdaten, nämlich die die in der Rundläuferpresse montierten Hardwarekomponenten charakterisierenden Komponentenparameterdaten, die die Prozessparameter während des Betriebs der Rundläuferpresse charakterisierenden Prozessparameterdaten, die die Pulvereigenschaften des in der Rundläuferpresse verpressten Pulvermaterials charakterisierenden Pulverparameterdaten sowie die die Tabletteneigenschaften der in der Rundläuferpresse erzeugten Tabletten charakterisierenden Tablettenparameterdaten in jeweils eine Gruppe zu gruppieren, so dass mindestens vier Gruppen von für den Tablettierprozess in der Rundläuferpresse maßgeblichen Parameterdaten gebildet werden. Diese mindestens vier Gruppen von Parameterdaten werden in einer Datenbank hinterlegt, so dass sie reproduzierbar und jederzeit abrufbar zur Verfügung stehen.

Die in der Datenbank hinterlegten Parameterdaten der vier Gruppen werden weiterhin derart miteinander korreliert, dass bei vorgegebenen Parameterdaten aus mindestens zwei der vier Gruppen, zum Beispiel bei vorgegebenen Pulverparameterdaten und Tablettenparameterdaten, die Parameterdaten der weiteren der vier Gruppen, beispielsweise die Komponentenparameterdaten und die Prozessparameterdaten, bestimmt werden können. Natürlich können auf Grundlage der Korrelation auch zu vorgegebenen Parameterdaten aus drei der vier Gruppen Parameterdaten der weiteren der vier Gruppen bestimmt werden. Zum Konfigurieren des Herstellprozesses werden zu vorgegebenen Parameterdaten aus mindestens zwei der vier Gruppen auf Grundlage der in der Datenbank hinterlegten Korrelation der Parameterdaten Parameterdaten der weiteren der vier Gruppen festgelegt. Beispielsweise können zum Konfigurieren des Herstellprozesses in der Rundläuferpresse auf Grundlage der in der Datenbank hinterlegten Korrelation der Parameterdaten zu vorgegebenen Pulverparameterdaten und/oder zu vorgegebenen Tablettenparameterdaten Komponentenparameterdaten und/oder Prozessparameterdaten festgelegt werden. Insbesondere können zu vorgegebenen Tablettenparameterdaten, insbesondere für eine gewünschte Tablettenqualität vorgegebenen Solltablettenparameterdaten, unter Berücksichtigung vorgegebener, weil für das jeweils zu verpressende Pulvermaterial feststehender Pulverparameterdaten, die sich aus der in der Datenbank hinterlegten Korrelation ergebenden Komponentenparameterdaten und Prozessparameterdaten bestimmt werden. Die Prozessparameterdaten sind in der Regel einstellbar und können entsprechend so gewählt werden, dass sich im Betrieb der Rundläuferpresse für das vorgegebene Pulvermaterial mit seinen Pulverparameterdaten die gewünschte Tablettenqualität, insbesondere mit den gewünschten Tablettenparameterdaten, ergibt. Auch die Komponentenparameterdaten sind in gewissen Grenzen einstellbar. Beispielsweise können Füllräder der Fülleinrichtung oder andere Komponenten flexibel gewählt werden.

Der Erfindung liegt folglich die Erkenntnis zugrunde, dass Parameterdaten einer oder zwei Gruppen aus einer bestimmten Kombination von Parameterdaten der anderen Gruppen derart bestimmbar sind, dass das vorgegebene bzw. gewünschte Ergebnis des Herstellprozesses in der Rundläuferpresse erreicht wird, insbesondere die gewünschten Tablettenparameterdaten, und damit die vorgegebene Tablettenqualität.

Regelmäßig ist davon auszugehen, dass für einen vorgegebenen Herstellprozess das Pulvermaterial mit seinen Pulverparameterdaten festgelegt ist. Auch die Tablettenparameterdaten sind zum Erreichen der gewünschten Tablettenqualität als Sollwerte festgelegt. Einstellbar sind die Prozessparameterdaten und die Komponentenparameterdaten. Diese können aufgrund der erfindungsgemäßen Korrelation in der Datenbank so definiert werden, dass für das jeweilige Pulvermaterial die gewünschte Tablettenqualität erzielt wird.

Sofern vorliegend von vorgegebenen oder bestimmten oder vorhergesagten Parameterdaten einer Gruppe gesprochen wird, umfasst dies jeweils die Möglichkeit sämtlicher oder nur einiger der in der jeweiligen Gruppe hinterlegten Parameterdaten. Insbesondere Komponentenparameterdaten und gegebenenfalls auch Prozessparameterdaten können teilweise festgelegt und teilweise einstellbar sein. Auch die Korrelation der Parameterdaten der Gruppen kann sämtliche oder nur einige der Parameterdaten der Gruppe(n) umfassen. Natürlich ist die Aussagekraft der Korrelation besser, je mehr Parameterdaten der jeweiligen Gruppe in die Korrelation einfließen.

Aufgrund des Hinterlegens der Gruppen von Parameterdaten in einer Datenbank und der erfindungsgemäßen Korrelation der Daten in der Datenbank ist das Ergebnis der Konfiguration für den jeweiligen Herstellprozess einfach zu erreichen und zuverlässig reproduzierbar. Sobald die Parameterdaten einmal in der Datenbank hinterlegt und korreliert wurden, sind nachfolgend keine aufwendigen Versuchsreihen zum Finden der jeweiligen optimalen Konfiguration mehr erforderlich. Das Finden der optimalen Konfiguration für den jeweiligen Herstellprozess zum Beispiel im Rahmen der Prozessentwicklung und entsprechend der spätere Einrichtungsprozess der Rundläuferpresse ist unabhängig von personengebundenem Know-how und damit sicher und zuverlässig reproduzierbar durchführbar.

Die Datenausgabe der erfindungsgemäß bestimmten bzw. festgelegten Parameterdaten, zum Beispiel der Prozessparameterdaten, kann über eine Anzeigeeinrichtung, beispielsweise ein Dashboard, einer Bedienperson zur Verfügung gestellt werden. Die Anzeigeeinrichtung kann stationär an oder in der Nähe der Rundläuferpresse angeordnet sein. Sie kann aber auch auf einem PC, einem Tablet oder einem Smartphone ausgebildet sein. Es ist auch denkbar, dass die Einstellung der im Rahmen der Konfiguration des Herstellprozesses festgelegten Parameterdaten, zum Beispiel der Prozessparameterdaten, automatisch erfolgt, insbesondere durch die Konfiguriereinrichtung der erfindungsgemäßen Rundläuferpresse. Erfindungsgemäß kann mithilfe der Datenbankkorrelation ausgehend von zum Beispiel vorgegebenen Pulverparameterdaten sowie vorgegebenen Tablettenparameterdaten eine ideale Maschinenkonfiguration, insbesondere die Komponentenparameterdaten sowie die Prozessparameterdaten, für den jeweiligen Herstellprozess vorhergesagt werden. Gerade die Pulverparameterdaten sind für den Erfolg des Tablettierprozesses von entscheidender Bedeutung und in bisherigen Verfahren bzw. Rundläuferpressen bislang kaum sicher reproduzierbar zu berücksichtigen. Die Konfiguration des Herstellprozesses kann wie erläutert dem eigentlichen Herstellprozess in einer Rundläuferpresse vorgelagert erfolgen. Die Ergebnisse der Konfiguration können dann in dem späteren Herstellprozess entsprechend genutzt werden. Es ist aber auch möglich, dass die erfindungsgemäße Konfiguration direkt an der Rundläuferpresse für den Herstellprozess erfolgt, also die konkrete Maschinenkonfiguration umfasst.

Insgesamt wird durch die Erfindung eine Verbesserung der Qualität der Tabletten, bei denen es sich zum Beispiel um feste orale Arzneiformen (oral solid dosages OSD) handeln kann, und eine Zeit- und Kostenersparnis erreicht. Es ist eine zuverlässig reproduzierbare und dokumentierbare Vorhersage zur Verbesserung des Tablettierprozesses, und damit ein effizienterer Prozess, möglich, insbesondere eine Prädiktion des Prozesses für die "beste" Tablette, also die Tablette, die mit allen geforderten Charakteristika übereinstimmt, wobei in einer Charge die geringste Variabilität zwischen den Tabletten vorliegt. Weiterhin wird eine Standardisierung des Arbeitsprozesses erreicht.

Wie bereits erläutert, ist es nach einer Ausgestaltung möglich, dass für vorgegebene Parameterdaten aus mindestens zwei der vier Gruppen entsprechend der Korrelation der in der Datenbank hinterlegten Parameterdaten die Parameterdaten der weiteren der vier Gruppen vorhergesagt werden. Unter Verwendung entsprechender Algorithmen, wie unten noch näher erläutert, ist es insbesondere möglich, die Parameterdaten auch für noch nicht experimentell im Rahmen von Versuchsreihen untersuchte Parameterkombinationen vorherzusagen. Dadurch wird eine weitere Vereinfachung der Konfiguration einer Rundläuferpresse insbesondere für noch nicht untersuchte Parameterkombinationen erreicht.

Die Komponentenparameterdaten können beispielsweise den Typ der in der Rundläuferpresse montierten Pressstempel, Matrizenscheibe, Fülleinrichtung und/oder Druckeinrichtung umfassen. Dies umfasst beispielsweise die Anzahl, den Durchmesser, die Länge, die Stempelkopf- und/oder Stempelspitzengeometrie der montierten Pressstempel. Weiter umfasst dies zum Beispiel, ob die Matrizenscheibe einstückig oder aus Ringsegmenten aufgebaut ist und/oder die Anzahl und/oder Geometrie der Kavitäten der Matrizenscheibe, sowie beispielsweise ob die Kavitäten direkt als Bohrungen in der Matrizenscheibe ausgeführt sind oder in in die Matrizenscheibe eingesetzten Matrizeneinsätzen. Weiter umfasst dies beispielsweise die Art der Fülleinrichtung, zum Beispiel die Geometrie einer Füllkammer der Fülleinrichtung und/oder die Anwesenheit eines oder mehrerer drehend angetriebener Füllräder sowie die Geometrie(n) des Füllrads bzw. der Füllräder. Weiterhin umfasst dies zum Beispiel die Anzahl und die Art der Druckeinrichtung, insbesondere die Art der oberen und unteren Druckrollen und/oder die Anwesenheit von Vor- und Hauptdruckeinrichtungen. Auch die Anwesenheit mehrerer Füll- und/oder Druckeinrichtungen zur Herstellung von Mehrschichttabletten ist von den Komponentenparameterdaten beispielsweise umfasst. Selbstverständlich können die Komponentenparameterdaten auch weitere Komponenten der Rundläuferpresse umfassen, zum Beispiel obere und/oder untere Steuerkurven für die Pressstempel, insbesondere Füllkurven, sowie eine Auswerfereinrichtung und ihre Komponenten und Dichtungen bzw. Dichtsegmente.

Die Prozessparameterdaten können beispielsweise die Drehgeschwindigkeit des Rotors, die Drehgeschwindigkeit mindestens eines Füllrads der Fülleinrichtung und/oder die Presskraft der Druckeinrichtung umfassen. Sofern Fülleinrichtungen Füllräder aufweisen, werden diese für eine bessere Pulververfügbarkeit häufig drehend angetrieben. Die Drehgeschwindigkeit der Füllräder hat einen Einfluss auf die Befüllung der Kavitäten der Matrizenscheibe mit Pulvermaterial. Die Presskraft ist die aufgrund des Zusammenwirkens der Druckeinrichtung, insbesondere oberer und unterer Druckrollen, mit den oberen und unteren Pressstempeln beim Verpressen des Pulvermaterials ausgeübte Presskraft. Sie hat ebenfalls einen entscheidenden Einfluss auf das Tablettierergebnis.

Wie bereits erwähnt, liegt der Erfindung weiter die Erkenntnis zugrunde, dass für eine sinnvolle Nutzung der Datenbank bezüglich Vorhersagen zum Tablettierergebnis die Pulverparameterdaten, insbesondere die Auswahl der berücksichtigten Pulverparameterdaten sowie der Pulvercharakterisierungsmethoden, von entscheidender Bedeutung sind. Nur wenn die für den Tablettierprozess entscheidenden Parametergrößen korrekt erfasst werden, ist die grundlegende Datenbasis für eine geeignete Vorhersage bzw. Konfiguration des Herstellprozesses der Rundläuferpresse gegeben. Hinsichtlich der insoweit besonders relevanten Pulverparameterdaten sollten die analytischen Methoden zum Erfassen der Pulvereigenschaften in ihrer Gesamtheit prädiktiv sein für unter anderem die Fließeigenschaften, die Kompressibilität, die Kompaktibilität, die Tablettierbarkeit sowie die Klebeneigung des Pulvers. Die Auswahl der Messmethoden der Pulverparameter muss zudem für einen sinnvollen Vergleich unterschiedlicher Pulver geeignet sein. Üblicherweise erfolgt in der pharmazeutischen Qualitätskontrolle für jedes Pulvermaterial eine eigene Methodenentwicklung, sofern es sich nicht um eine sogenannte Konventionsmethode handelt. Im Rahmen der Methodenentwicklung für den jeweiligen Pulverparameter werden die Einstellungen der variablen Größen so gewählt, dass die relevanten Eigenschaften des jeweiligen Pulvermaterials entsprechend sicher erfasst werden. Grundsätzlich ist zu beachten, dass das zu verpressende Pulvermaterial in der Regel eine nicht veränderliche Eingangsgröße des Herstellprozesses der Rundläuferpresse darstellt. Für die Konfiguration des Produktionsprozesses ist es somit essenziell, die für den jeweiligen Prozess relevanten pulvertechnologischen Eigenschaften des Ausgangsproduktes zu kennen und zu verstehen. Die Herausforderung in der Methodenentwicklung für die erfindungsgemäße Datenbank liegt darin, eine für möglichst viele Pulvermaterialien geeignete Methode zur Erfassung von Pulverparameterdaten zu finden, um zum einen eine Vergleichbarkeit der Pulvermaterialien zu gewährleisten und zum anderen für das Verhalten des Pulvermaterials während der Tablettierung prädiktiv zu sein.

Auf Grundlage dieser Erkenntnisse können die Pulverparameterdaten das Pulvervolumen, die Pulverdichte, die Partikelgrößenverteilung, den Feuchtigkeitsgehalt und/oder den Trocknungsverlust des Pulvermaterials umfassen. Das Pulvervolumen und die Pulverdichte, insbesondere das Schütt- und Stampfvolumen sowie die ebenfalls besonders bedeutende Schütt- und Stampfdichte inklusive abgeleiteter Größen wie Hausner-Faktor und Carr-Index sowie der Schüttwinkel dienen zur Charakterisierung der Fließfähigkeit des Pulvermaterials, die für den Tablettierprozess bedeutsam ist. Die (Rest-)Feuchtigkeit bzw. der Trocknungsverlust ist ebenfalls bedeutend für das Fließverhalten und kann zum Beispiel mittels einer Infrarot- oder Halogenwaage gemessen werden. Zum anderen sind diese Parameterdaten auch bedeutsam für die Tablettierbarkeit bzw. die mechanische Festigkeit der resultierenden Tablette. Die Partikelgrößenverteilung ist prädiktiv für das Fließverhalten sowie für die Kompressibilität und Kompaktibilität des Pulvermaterials. Beispielsweise bei der Partikelgrößenverteilungsbestimmung mittels Laserdiffraktometrie muss ein geeigneter Dispergierdruck ermittelt werden, der in der Lage ist, das Pulvermaterial optimal zu zerstäuben, um zweckbezogen aussagekräftige Ergebnisse zu liefern. Beispielsweise kann die komplette Partikelgrößenverteilung gemessen werden.

Ein durch die vorliegenden Erfinder als relevant erkannter Pulverparameter ist darüber hinaus die Wasseraktivität des Pulvermaterials. Die Wasseraktivität hat ähnlich wie der Trocknungsverlust Einfluss auf das Fließverhalten und die Tablettierbarkeit des Pulvermaterials. Während der Trocknungsverlust das gesamte in dem Pulvermaterial enthaltene Wasser misst, misst die Wasseraktivität allerdings nur den Anteil des verfügbaren Wassers in dem Pulvermaterial im Vergleich zum Wassergehalt bei einer vollständigen Sättigung. Die Erfinder haben erkannt, dass die Wasseraktivität für eine Prädiktion der Tablettiereigenschaften des Pulvermaterials besser geeignet ist als der Trocknungsverlust. Ein weiterer Vorteil der Wasseraktivität ist, dass im Wesentlichen sämtliche Pulvermaterialien für die Bestimmung dieses Parameters unter gleichen Bedingungen geeignet sind. Im Gegensatz hierzu sind nicht alle Pulvermaterialien für eine sinnvolle Bestimmung des Trocknungsverlusts geeignet. Beispielhaft genannt sei Brausepulver.

Mit den vorgenannten Pulverparameterdaten wird nach Erkenntnis der Erfinder ein geeignetes Gleichgewicht erreicht zwischen der Datenqualität, insbesondere einer ausreichenden Erfassung der Pulverparameterdaten für die erfindungsgemäße Korrelation bzw. Konfiguration einerseits sowie der Praktikabilität, insbesondere der Messdauer und des diesbezüglichen Aufwands, andererseits.

Über die vorgenannten Pulverparameterdaten bzw. Messmethoden hinaus können weitere Pulverparameterdaten bzw. Messmethoden sinnvoll sein. Beispielhaft genannt seien:
- Weitere Methoden zur Fließfähigkeitscharakterisierung wie "flow through an orifice",
- Bestimmen der wahren Dichte der Pulver mittels Helium-Pyknometrie; hierdurch können unter Umständen noch genauere Informationen zur Kompressibilität und Kompaktibilität erlangt werden,
- Bestimmen des Fließverhaltens mittels Ringscherzelle oder Pulverrheometrie; dies kann unter Umständen noch genauere Aussagen zur Fließfähigkeit liefern,
- Partikelgrößenbestimmung mit bildgebenden Verfahren wie zB Rasterelektronenmikroskopie oder dynamischer Bildanalyse; neben der Erhebung der Partikelgröße würden hier auch Informationen über die Partikelform erhoben werden, die für Fließeigenschaften, die Kompressibilität und Kompaktibilität sowie Tablettierbarkeit prädiktiv sein können,
- Pulververdichtungsanalysen; während die anderen genannten Methoden die Kompressibilität, Kompaktibilität und Tablettierbarkeit eher indirekt beschreiben, gibt es auch Möglichkeiten, diese Daten direkt zu erheben. Solche Daten könnten ebenfalls in die Datenbank aufgenommen werden, oder (ähnlich wie bei der Partikelgrößenverteilung) könnten bestimmte charakteristische Größen erfasst und zusammen mit etwaigen abgeleiteten Größen zu analytischen Zwecken genutzt werden. Auf diese Weise könnte weiterer Informationsgehalt hinsichtlich Kompressibilität und Kompaktibilität sowie Tablettierbarkeit und Klebeneigung erlangt werden.

Die Tablettenparameterdaten können beispielsweise die Tablettenhärte, die Tablettendichte und/oder die Tablettengröße der in der Rundläuferpresse herzustellenden Tabletten bzw. hergestellten Tabletten umfassen, wie bereits erläutert.

Gemäß einer besonders praxisgemäßen Ausgestaltung können die in der Datenbank hinterlegten Parameterdaten gegebenenfalls einschließlich der Korrelation der Parameterdaten im Rahmen von Versuchsreihen experimentell ermittelt werden.

Beispielsweise kann die Korrelation der Parameterdaten experimentell ermittelt werden, indem für im Rahmen der Versuchsreihen veränderte Kombinationen von Komponentenparameterdaten, Prozessparameterdaten und Pulverparameterdaten jeweils die sich ergebenden Tablettenparameterdaten gemessen werden. Durch Versuchs- und/oder Produktionsläufe können also verschiedene Kombinationen von Parameterdaten der unterschiedlichen Gruppen eingestellt werden und die sich daraus zum Beispiel für ein bestimmtes Pulvermaterial jeweils ergebenden Tablettenparameterdaten ermittelt werden. Die im Rahmen der Versuchsreihen ermittelten Parameterdaten werden zusammen mit den Pulverparameterdaten in der Datenbank entsprechend korreliert gespeichert.

Grundsätzlich können die Pulverparameterdaten und/oder die Tablettenparameterdaten sowohl außerhalb des Herstellungsprozesses der Rundläuferpresse als auch innerhalb des Herstellungsprozesses der Rundläuferpresse bzw. außerhalb der Rundläuferpresse als auch innerhalb der Rundläuferpresse ermittelt werden. Beispielsweise kann eine Ermittlung außerhalb des Herstellungsprozesses der Rundläuferpresse bzw. außerhalb der Rundläuferpresse in einem von der Rundläuferpresse getrennten Labor erfolgen. Ein Erfassen im Herstellungsprozess kann in-line, on-line oder at-line erfolgen. Bei der Erfassung der Parameterdaten im Herstellungsprozess bzw. in der Rundläuferpresse erfolgt zum Beispiel eine Messung von Tablettenparameterdaten in einem mit der Rundläuferpresse verbundenen Messsystem, das die entsprechenden Messergebnisse der Pulverparameterdaten zurückmeldet, beispielsweise an die Konfiguriereinrichtung, die diese entsprechend in der Datenbank hinterlegt. Pulverparameterdaten können zum Beispiel in einem von der Rundläuferpresse getrennten Labor ermittelt werden und ebenfalls in der Datenbank hinterlegt werden, insbesondere automatisch. Grundsätzlich sind aber auch Messungen von Pulverparameterdaten im Herstellungsprozess in der Rundläuferpresse denkbar.

Die Korrelation der in der Datenbank hinterlegten Parameterdaten kann mittels eines in einer Auswerteeinrichtung hinterlegten Algorithmus erfolgen. Mit der Auswerteeinrichtung bzw. dem darin hinterlegten Algorithmus kann, wie eingangs erläutert, grundsätzlich auch eine Korrelation von bislang nicht experimentell erfassten Parameterdatenkombinationen der verschiedenen Gruppen erfolgen, insbesondere mit Algorithmen wie nachstehend noch näher erläutert. Auch ist eine automatische Konfiguration der Rundläuferpresse für den jeweiligen Herstellprozess insbesondere mit der Konfiguriereinrichtung möglich. Die Auswerteeinrichtung kann Teil der Rundläuferpresse sein, zum Beispiel in die Maschinensteuerung integriert sein, oder getrennt hiervon ausgebildet sein, beispielsweise auf einem PC, einem Tablet oder einem Smartphone. Die Auswerteeinrichtung kann auch in die Konfiguriereinrichtung integriert sein. Die Datenbank kann in die Konfiguriereinrichtung oder in die Auswerteeinrichtung integriert sein oder getrennt von diesen ausgebildet sein.

Der Algorithmus kann einen Algorithmus des maschinellen Lernens umfassen. Insbesondere kann in der Auswerteeinrichtung ein selbstlernender Algorithmus hinterlegt werden, der die Korrelation der in der Datenbank hinterlegten Parameterdaten auf Grundlage von Trainingsdaten und/oder Erfahrungsdaten aus dem Betrieb der Rundläuferpresse (fortlaufend) anpasst bzw. optimiert. Der Algorithmus des maschinellen Lernens kann zum Beispiel neuronale Netze umfassen.

Die Korrelation der in der Datenbank hinterlegten Parameterdaten kann gemäß einer weiteren Ausgestaltung mittels einer multivariaten Datenanalyse erfolgen. Multivariate Datenanalysen erlauben es, mehrere Parameter, vorliegend die Parameterdaten der unterschiedlichen Gruppen, gleichzeitig zu untersuchen und hinsichtlich ihrer Korrelation zu bewerten. Mit der multivariaten Datenanalyse können insbesondere für die Korrelation der Parameterdaten relevante Informationen von hierfür nicht relevanten Informationen unterschieden werden.

Die multivariate Datenanalyse kann gemäß einer besonders praxisgemäßen Ausgestaltung eine Hauptkomponentenanalyse umfassen. Mittels Hauptkomponentenanalysen (Principal Components Analysis PCA) kann die Identifizierung der für die vorliegende Fragestellung, hier die Korrelation der Parameterdaten der unterschiedlichen Gruppen, relevanten Daten und deren Trennung von für die vorliegende Fragestellung nicht relevanten Informationen in besonders zuverlässiger Weise erfolgen. So kann im Rahmen der Hauptkomponentenanalyse zu den Parameterdaten jeder Gruppe mindestens eine Hauptkomponente identifiziert werden, die in Bezug auf die Korrelation der Parameterdaten der unterschiedlichen Gruppen die größte Varianz aufweist. Die Hauptkomponente(n) mit der größten Varianz enthält bzw. enthalten die meiste Information hinsichtlich der Korrelation der Parameterdaten und sind somit besonders relevant für die vorliegende Fragestellung. Durch die Reduzierung der Parameterdaten auf die jeweils mindestens eine Hauptkomponente pro Gruppe, beispielsweise auf zwei oder drei Hauptkomponenten pro Gruppe, kann somit bei erheblicher Vereinfachung der Datenmenge und damit der Auswertung dennoch eine zuverlässige Korrelation der Parameterdaten erfolgen.

Die multivariate Datenanalyse kann auch ein multivariates Regressionsverfahren umfassen, wie zum Beispiel ein Partial Least Square Regression Verfahren (PLS/PLSR), um Modelle zur Korrelation der Parameterdaten der unterschiedlichen Gruppen bilden zu können.

Die Konfiguriereinrichtung der erfindungsgemäßen Vorrichtung kann zur Durchführung des erfindungsgemäßen Verfahrens ausgebildet sein. Ebenfalls kann die Konfiguriereinrichtung, insbesondere ihre Datenbank einschließlich der Korrelation der Parameterdaten, nach dem erfindungsgemäßen Verfahren ausgebildet sein bzw. ausgebildet werden. Das erfindungsgemäße Verfahren kann entsprechend mit einer erfindungsgemäßen Vorrichtung durchgeführt werden.

Die Erfindung betrifft auch eine Rundläuferpresse, umfassend eine erfindungsgemäße Vorrichtung.

Ein Ausführungsbeispiel der Erfindung wird nachfolgend anhand von Figuren näher erläutert. Es zeigen schematisch:
- Figur 1: eine Rundläuferpresse in abgewickelter Darstellung des Rotors,
- Figur 2: eine Veranschaulichung des Einflusses verschiedener Parameterdaten auf die Tablettenparameterdaten,
- Figur 3: eine Veranschaulichung zur Bereitstellung von Daten für die erfindungsgemäß genutzte Datenbank, und
- Figur 4: eine Veranschaulichung des Zusammenhangs zwischen den Parameterdaten der verschiedenen Gruppen und der hierauf basierenden Vorhersage von Parameterdaten.

Soweit nichts anderes angegeben ist, bezeichnen in den Figuren gleiche Bezugszeichen gleiche Gegenstände.

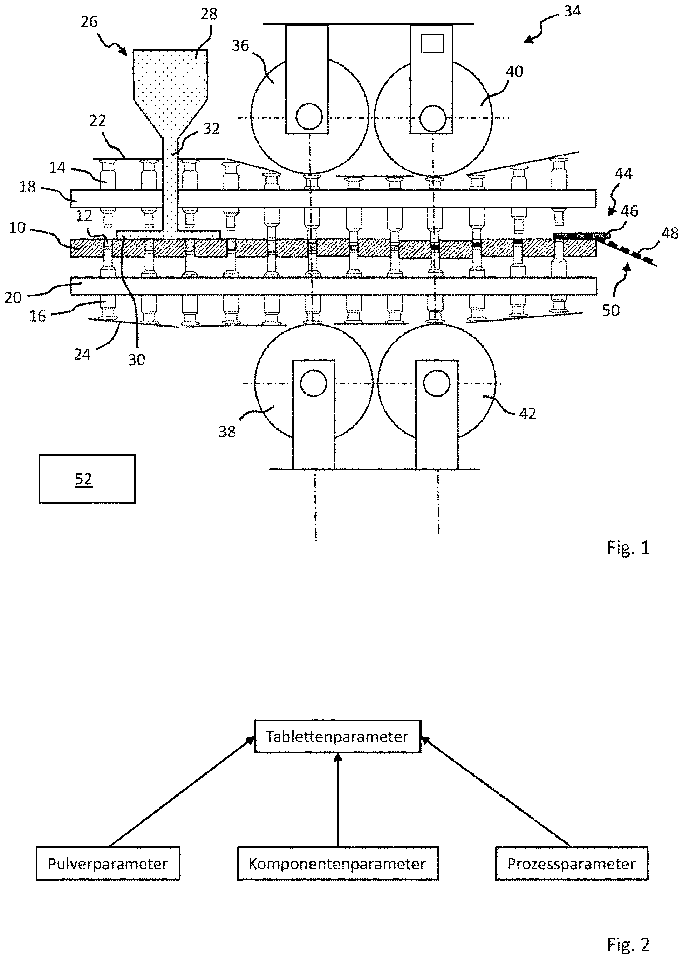

Die in Figur 1 gezeigte Rundläuferpresse ist eine Rundläuferpresse zur Tablettenherstellung, in der pulverförmiges Material zu Tabletten verpresst wird. Die Rundläuferpresse umfasst einen durch einen Drehantrieb drehend angetriebenen Rotor mit einer Matrizenscheibe 10, die eine Mehrzahl von Kavitäten 12 aufweist. Die Kavitäten 12 können beispielsweise durch Bohrungen der Matrizenscheibe 10 gebildet sein. Weiter umfasst der Rotor eine Mehrzahl von oberen Pressstempeln 14 und unteren Pressstempeln 16, die mit der Matrizenscheibe 10 synchron umlaufen. Die oberen Pressstempel 14 sind in einer oberen Stempelführung 18 axial geführt und die unteren Pressstempel 16 sind in einer unteren Stempelführung 20 axial geführt. Die axiale Bewegung der oberen Pressstempel 14 und unteren Pressstempel 16 im Zuge der Drehung des Rotors wird durch obere Steuerkurvenelemente 22 und untere Steuerkurvenelemente 24 gesteuert. Die Rundläuferpresse umfasst weiterhin eine Fülleinrichtung 26, die ein Füllreservoir 28 und eine Füllkammer 30 aufweist, die über ein Füllrohr 32 verbunden sind. Auf diese Weise gelangt in dem vorliegenden Beispiel Pulvermaterial aus dem Füllreservoir 28 über das Füllrohr 32 schwerkraftbedingt in die Füllkammer 30 und aus dieser über eine an der Unterseite der Füllkammer 30 vorgesehene Befüllöffnung wiederum schwerkraftbedingt in die Kavitäten 12 der Matrizenscheibe 10.

Die Rundläuferpresse umfasst außerdem eine Druckeinrichtung 34. Die Druckeinrichtung 34 umfasst eine Vordruckeinrichtung mit einer oberen Vordruckrolle 36 und einer unteren Vordruckrolle 38, sowie eine Hauptdruckeinrichtung mit einer oberen Hauptdruckrolle 40 und einer unteren Hauptdruckrolle 42. Darüber hinaus umfasst die Rundläuferpresse eine Auswurfeinrichtung 44 und eine Abstreifeinrichtung 46 mit einem Abstreifelement, das die in der Rundläuferpresse hergestellten Tabletten 48 einer Ablaufeinrichtung 50 zum Abführen aus der Rundläuferpresse zuführt. Die Abstreifeinrichtung 46 kann zum Beispiel ein vorzugsweise sichelförmiges Abstreifelement umfassen, das im Bereich der Auswurfeinrichtung 44 durch die unteren Pressstempel 16 auf die Oberseite der Matrizenscheibe 10 geförderte Tabletten 48 von der Matrizenscheibe 10 abstreift und der Ablaufeinrichtung 50 zuführt.

Die Rundläuferpresse umfasst außerdem eine Auswerteeinrichtung 52 zum Steuern des Betriebs der Rundläuferpresse und zur Durchführung des erfindungsgemäßen Verfahrens, wie nachfolgend näher erläutert. Die Auswerteeinrichtung 52 bildet gemeinsam mit der in der Auswerteeinrichtung 52 oder getrennt von der Auswerteeinrichtung 52 ausgebildeten Datenbank entsprechend eine erfindungsgemäße Vorrichtung.

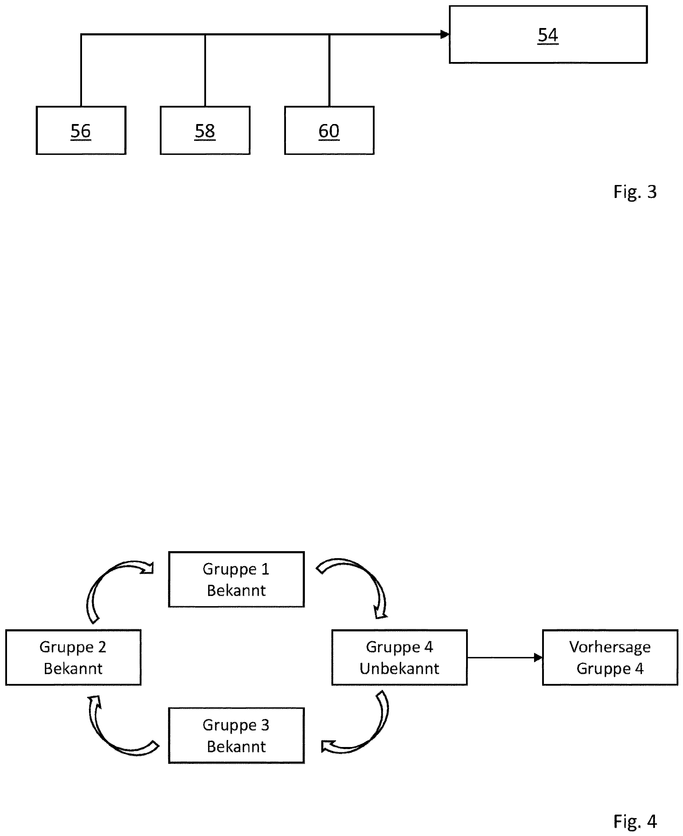

In Figur 2 ist schematisch dargestellt, wie Parameterdaten, hier Pulverparameterdaten, Komponentenparameterdaten und Prozessparameterdaten der Rundläuferpresse die Tablettenparameterdaten, also die Tablettenqualität der in der Rundläuferpresse hergestellten Tabletten beeinflussen. In Figur 3 ist eine in der Auswerteeinrichtung 52 enthaltene Datenbank 54 dargestellt, in der die erfindungsgemäßen Gruppen von Parameterdaten hinterlegt sind. In Figur 3 sind mehrere Clients 56, 58 und 60 dargestellt, die Datenquellen zum Hinterlegen der entsprechenden Parameterdaten in der Datenbank 54 bilden, wie durch den Pfeil in Figur 3 dargestellt. Die Clients 56, 58, 60 können zum Beispiel Messeinrichtungen in einem Labor und/oder in oder an der Rundläuferpresse sein, die entsprechende Messdaten zu Parameterdaten, zum Beispiel zu Pulverparameterdaten oder Tablettenparameterdaten, an die Auswerteeinrichtung 52 geben, die diese entsprechend der jeweiligen Gruppen in der in der Auswerteeinrichtung 52 oder getrennt von der Auswerteeinrichtung 52 ausgebildeten Datenbank 54 hinterlegt und wie oben erläutert korreliert werden.

In Figur 4 ist die Korrelation der Parameterdaten der vier in der Datenbank 54 hinterlegten Gruppen durch Pfeile dargestellt. Beispielsweise ist es auf Grundlage der in der Datenbank 54 erfolgten Korrelation der Parameterdaten der verschiedenen Gruppen möglich, bei vorgegebenen Parameterdaten der Gruppen 1, 2 und 3 die Parameterdaten der Gruppe 4 vorherzusagen, wie in Figur 4 schematisch dargestellt und wie oben erläutert. Auch möglich ist es auf Grundlage der erfindungsgemäßen Korrelation möglich, bei vorgegebenen Parameterdaten zum Beispiel der Gruppen 1 und 2 die Parameterdaten der Gruppen 3 und 4 vorherzusagen. Die Korrelation kann experimentell durch entsprechende Versuchsreihen ermittelt werden und/oder durch entsprechende Algorithmen, beispielsweise Algorithmen des maschinellen Lernens ermittelt werden, auch für experimentell nicht erfasste Kombinationen von Parameterdaten.

Auf Grundlage der in der Datenbank 54 hinterlegten und korrelierten Parameterdaten können mittels einer Konfiguriereinrichtung 52, die beispielsweise ebenfalls durch die Auswerteeinrichtung 52 gebildet sein kann, zu vorgegebenen Parameterdaten aus mindestens zwei Gruppen die Parameterdaten der weiteren Gruppen festgelegt werden. Beispielsweise kann es sich bei den festgelegten Parameterdaten der Gruppe 3 um Komponentenparameterdaten und bei den Parameterdaten der Gruppe 4 um Prozessparameterdaten der Rundläuferpresse handeln, die beide in gewissen Grenzen abhängig vom jeweiligen Prozess einstellbar sind.

### Bezugszeichenliste

- 10: Matrizenscheibe
- 12: Kavitäten
- 14: obere Pressstempel
- 16: untere Pressstempel
- 18: obere Stempelführung
- 20: untere Stempelführung
- 22: obere Steuerkurvenelemente
- 24: untere Steuerkurvenelemente
- 26: Fülleinrichtung
- 28: Füllreservoir
- 30: Füllkammer
- 32: Füllrohr
- 34: Druckeinrichtung
- 36: obere Vordruckrolle
- 38: untere Vordruckrolle
- 40: obere Druckrolle
- 42: untere Druckrolle
- 44: Auswurfeinrichtung
- 46: Abstreifeinrichtung
- 48: Tabletten
- 50: Ablaufeinrichtung
- 52: Auswerteeinrichtung / Konfiguriereinrichtung
- 54: Datenbank
- 56: Client
- 58: Client
- 60: Client

## Patentansprüche

1. Verfahren zum Konfigurieren eines Herstellprozesses einer Rundläuferpresse, wobei die Rundläuferpresse einen mittels eines Drehantriebs drehend antreibbaren Rotor umfasst, wobei der Rotor obere und untere Stempelführungen (18, 20) aufweist, wobei in der oberen Stempelführung (18) obere Pressstempel (14) des Rotors und in der unteren Stempelführung (20) untere Pressstempel (16) des Rotors geführt sind, und wobei der Rotor eine zwischen den Stempelführungen (18, 20) angeordnete Matrizenscheibe (10) mit Kavitäten (12) aufweist, wobei die Rundläuferpresse weiter eine Fülleinrichtung (26) umfasst, durch die Pulvermaterial in die Kavitäten (12) der Matrizenscheibe (10) gefüllt wird, und wobei die Rundläuferpresse weiter eine Druckeinrichtung (34) umfasst, die im Betrieb mit den oberen und unteren Pressstempeln (14, 16) zum Verpressen des Pulvermaterials in den Kavitäten (12) der Matrizenscheibe (10) zu Tabletten (48) zusammenwirkt, wobei das Verfahren durch die folgenden Schritte gekennzeichnet ist:
• in einer Datenbank (54) werden mehrere Gruppen von Parameterdaten hinterlegt, umfassend in einer ersten Gruppe Komponentenparameterdaten zu in der Rundläuferpresse montierten Komponenten, in einer zweiten Gruppe Prozessparameterdaten zu Prozessparametern beim Betrieb der Rundläuferpresse, in einer dritten Gruppe Pulverparameterdaten zu Pulvereigenschaften des in der Rundläuferpresse zu verpressenden Pulvermaterials, und in einer vierten Gruppe Tablettenparameterdaten zu Tabletteneigenschaften der in der Rundläuferpresse herzustellenden Tabletten (48),
• in der Datenbank (54) hinterlegte Parameterdaten der verschiedenen Gruppen werden miteinander korreliert, derart dass zu vorgegebenen Parameterdaten aus mindestens zwei Gruppen Parameterdaten der weiteren der vier Gruppen bestimmbar sind,
• zum Konfigurieren des Herstellprozesses der Rundläuferpresse werden zu vorgegebenen Parameterdaten aus mindestens zwei der vier Gruppen gemäß der Korrelation der in der Datenbank (54) hinterlegten Parameterdaten Parameterdaten der weiteren der vier Gruppen festgelegt.

2. Verfahren nach Anspruch 1, **dadurch gekennzeichnet, dass** zum Konfigurieren des Herstellprozesses der Rundläuferpresse zu vorgegebenen Pulverparameterdaten und/oder vorgegebenen Tablettenparameterdaten gemäß der Korrelation der in der Datenbank (54) hinterlegten Parameterdaten Komponentenparameterdaten und/oder Prozessparameterdaten festgelegt werden.

3. Verfahren nach einem der vorhergehenden Ansprüche, **dadurch gekennzeichnet, dass** für vorgegebene Parameterdaten aus mindestens zwei der vier Gruppen entsprechend der Korrelation der in der Datenbank (54) hinterlegten Parameterdaten Parameterdaten der weiteren der vier Gruppen vorhergesagt werden.

4. Verfahren nach einem der vorhergehenden Ansprüche, **dadurch gekennzeichnet, dass** die Komponentenparameterdaten die in der Rundläuferpresse montierten Pressstempel, Matrizenscheibe (10), Fülleinrichtung (26), insbesondere mindestens ein Füllrad der Fülleinrichtung (26), Druckeinrichtung (34), Steuerkurven, insbesondere Füllkurven, und/oder Dichtungen umfassen.

5. Verfahren nach einem der vorhergehenden Ansprüche, **dadurch gekennzeichnet, dass** die Prozessparameterdaten die Drehgeschwindigkeit des Rotors, die Drehgeschwindigkeit mindestens eines Füllrads der Fülleinrichtung (26) und/oder die Presskraft der Druckeinrichtung (34) umfassen.

6. Verfahren nach einem der vorhergehenden Ansprüche, **dadurch gekennzeichnet, dass** die Pulverparameterdaten das Pulvervolumen, die Pulverdichte, die Partikelgrößenverteilung, den Feuchtigkeitsgehalt und/oder den Trocknungsverlust des Pulvermaterials umfassen und/oder dass die Pulverparameterdaten die Wasseraktivität des Pulvermaterials umfassen.

7. Verfahren nach einem der vorhergehenden Ansprüche, **dadurch gekennzeichnet, dass** die Tablettenparameterdaten die Tablettenhärte, die Tablettendichte und/oder die Tablettengröße der in der Rundläuferpresse herzustellenden Tabletten (48) umfassen.

8. Verfahren nach einem der vorhergehenden Ansprüche, **dadurch gekennzeichnet, dass** die in der Datenbank (54) hinterlegten Parameterdaten im Rahmen von Versuchsreihen experimentell ermittelt werden.

9. Verfahren nach einem der vorhergehenden Ansprüche, **dadurch gekennzeichnet, dass** die Pulverparameterdaten und/oder die Tablettenparameterdaten außerhalb des Herstellungsprozesses der Rundläuferpresse oder innerhalb des Herstellungsprozesses der Rundläuferpresse ermittelt werden.

10. Verfahren nach einem der vorhergehenden Ansprüche, **dadurch gekennzeichnet, dass** die Korrelation der in der Datenbank (54) hinterlegten Parameterdaten mittels eines in einer Auswerteeinrichtung (52) hinterlegten Algorithmus erfolgt, wobei der Algorithmus vorzugsweise einen Algorithmus des maschinellen Lernens umfasst.

11. Verfahren nach Anspruch 10, **dadurch gekennzeichnet, dass** die Korrelation der in der Datenbank (54) hinterlegten Parameterdaten mittels einer multivariaten Datenanalyse erfolgt.

12. Verfahren nach Anspruch 11, **dadurch gekennzeichnet, dass** die multivariate Datenanalyse eine Hauptkomponentenanalyse umfasst und/oder dass die multivariate Datenanalyse ein multivariates Regressionsverfahren umfasst.

13. Vorrichtung zum Konfigurieren eines Herstellprozesses einer Rundläuferpresse, wobei die Rundläuferpresse einen mittels eines Drehantriebs drehend antreibbaren Rotor umfasst, wobei der Rotor obere und untere Stempelführungen (18, 20) aufweist, wobei in der oberen Stempelführung (18) obere Pressstempel (14) des Rotors und in der unteren Stempelführung (20) untere Pressstempel (16) des Rotors geführt sind, und wobei der Rotor eine zwischen den Stempelführungen (18, 20) angeordnete Matrizenscheibe (10) mit Kavitäten (12) aufweist, wobei die Rundläuferpresse weiter eine Fülleinrichtung (26) umfasst, durch die Pulvermaterial in die Kavitäten (12) der Matrizenscheibe (10) gefüllt wird, und wobei die Rundläuferpresse weiter eine Druckeinrichtung (34) umfasst, die im Betrieb mit den oberen und unteren Pressstempeln (14, 16) zum Verpressen des Pulvermaterials in den Kavitäten (12) der Matrizenscheibe (10) zu Tabletten (48) zusammenwirkt,
**dadurch gekennzeichnet, dass** eine Konfiguriereinrichtung (52) vorgesehen ist, umfassend eine Datenbank (54), in der mehrere Gruppen von Parameterdaten hinterlegt sind, umfassend in einer ersten Gruppe Komponentenparameterdaten zu in der Rundläuferpresse montierten Komponenten, in einer zweiten Gruppe Prozessparameterdaten zu Prozessparametern beim Betrieb der Rundläuferpresse, in einer dritten Gruppe Pulverparameterdaten zu Pulvereigenschaften des in der Rundläuferpresse zu verpressenden Pulvermaterials, und in einer vierten Gruppe Tablettenparameterdaten zu Tabletteneigenschaften der in der Rundläuferpresse herzustellenden Tabletten (48), wobei in der Datenbank (54) hinterlegte Parameterdaten der verschiedenen Gruppen miteinander korreliert sind, derart dass zu vorgegebenen Parameterdaten aus mindestens zwei der vier Gruppen Parameterdaten der weiteren der vier Gruppen bestimmbar sind, und dass die Konfiguriereinrichtung (52) ausgebildet ist, zum Konfigurieren des Herstellprozesses der Rundläuferpresse zu vorgegebenen Parameterdaten aus mindestens zwei der vier Gruppen gemäß der Korrelation der in der Datenbank (54) hinterlegten Parameterdaten Parameterdaten der weiteren der vier Gruppen festzulegen.

14. Vorrichtung nach Anspruch 13, **dadurch gekennzeichnet, dass** die Konfiguriereinrichtung (52) zur Durchführung des Verfahrens nach einem der Ansprüche 1 bis 12 ausgebildet ist und/oder dass die Konfiguriereinrichtung (52), insbesondere die Datenbank (54), nach einem der Ansprüche 1 bis 12 ausgebildet ist.

15. Rundläuferpresse, umfassend einen mittels eines Drehantriebs drehend antreibbaren Rotor, wobei der Rotor obere und untere Stempelführungen (18, 20) aufweist, wobei in der oberen Stempelführung (18) obere Pressstempel (14) des Rotors und in der unteren Stempelführung (20) untere Pressstempel (16) des Rotors geführt sind, und wobei der Rotor eine zwischen den Stempelführungen (18, 20) angeordnete Matrizenscheibe (10) mit Kavitäten (12) aufweist, wobei die Rundläuferpresse weiter eine Fülleinrichtung (26) umfasst, durch die Pulvermaterial in die Kavitäten (12) der Matrizenscheibe (10) gefüllt wird, und wobei die Rundläuferpresse weiter eine Druckeinrichtung (34) umfasst, die im Betrieb mit den oberen und unteren Pressstempeln (14, 16) zum Verpressen des Pulvermaterials in den Kavitäten (12) der Matrizenscheibe (10) zu Tabletten (48) zusammenwirkt, weiter umfassend eine Vorrichtung nach einem der Ansprüche 13 oder 14.
